# EUROPEAN PATENT APPLICATION

(11) **EP 2 378 767 A1**
(43) Date of publication of application: **19.10.2011**
(21) Application number: 11151923.7
(22) Date of filing: 24.01.2011
(51) Int. Cl.: H04N 5/76

(54) **Broadcast recorder, broadcast recording method, and computer program product**

(30) Priority: 13.04.2010 JP 2010092580
(71) Applicant: Kabushiki Kaisha Toshiba, Tokyo 105-8001 (JP)
(72) Inventor: Gomikawa, Takao, Tokyo 105-8001 (JP)
(74) Representative: Henkel, Breuer & Partner

(57) **Abstract**

According to one embodiment, a broadcast recorder includes a receiver (131), a recorder (135), and a reproducer (136). The receiver (131) receives an instruction to program the recording of program data and the selection of the type of chapter division to be performed on the program data. The recorder (135) divides the program data into chapters according to the type of chapter division and records the program data. The reproducer (136) sequentially reproduces videos of chapters corresponding to the type of chapter division in the program data in response to an instruction to reproduce the program data.

## Description

### FIELD

Embodiments described herein relate generally to a broadcast recorder, a broadcast recording method, and a computer program product.

### BACKGROUND

There have been proposed technologies for storing television (TV) broadcast signals in a storage device to reproduce them. The TV broadcast signal contains a commercial message (CM) during program content or in the break of thereof. Besides, a scene sometimes changes to another in the same program content.

The user may wish to view only a desired scene in program content of a TV broadcast signal. In view of this, there has been proposed a conventional technology for dividing program content stored in a storage device into chapters. This allows the user to play only a desired chapter or scene (see, for example, Japanese Patent Application Publication (KOKAI) No. 2008-301070).

The conventional technology requires to divide program content into chapters after the program content is stored. That is, unless divided into chapters, program content cannot be viewed on chapter basis.

It is therefore an object of the invention to provide a broadcast recorder, a broadcast recording method, and a computer program product capable of providing a comfortable view of program content.

### SUMMARY

To overcome the problems and achieve the object mentioned above, according to an embodiment, a broadcast recorder comprises a receiver, a recorder, and a reproducer. The receiver is configured to receive an instruction to program the recording of program data and the selection of the type of chapter division to be performed on the program data. The recorder is configured to divide the program data into chapters according to the type of chapter division and record the program data. The reproducer is configured to sequentially reproduce videos of chapters corresponding to the type of chapter division in the program data in response to an instruction to reproduce the program data.

According to another embodiment, there is provided a broadcast recording method comprising: a receiver receiving an instruction to program the recording of program data and the selection of the type of chapter division to be performed on the program data; a recorder dividing the program data into chapters according to the type of chapter division and recording the program data; and a reproducer sequentially reproducing videos of chapters corresponding to the type of chapter division in the program data in response to an instruction to reproduce the program data.

According to still another embodiment, there is provided a computer program product that causes a computer to implement the above method.

As described above, according to an embodiment, it is possible to reduce the operational load on the user.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a signal processing system of a digital broadcast receiver according to an embodiment;
FIG. 2 is an exemplary schematic diagram of divided program content of a digital broadcast signal received by the digital broadcast receiver in the embodiment;
FIG. 3 is an exemplary schematic diagram of divided music program content in a program content of a digital broadcast signal received by the digital broadcast receiver in the embodiment;
FIG. 4 is an exemplary schematic diagram of divided news program content in a program content of a digital broadcast signal received by the digital broadcast receiver in the embodiment;
FIG. 5 is an exemplary schematic diagram of a recording setting screen displayed by the digital broadcast receiver in the embodiment;
FIG. 6 is an exemplary schematic diagram of a structure of a table for managing chapters of program content and labels each indicating one of the chapters in a storage device in the embodiment;
FIG. 7 is an exemplary schematic diagram of a program content list screen displayed by a display controller in the embodiment;
FIG. 8 is an exemplary schematic diagram of a chapter list screen displayed by the display controller in the embodiment;
FIG. 9 is an exemplary schematic diagram of a screen of program content divided into chapters reproduced by a reproducer in a usual manner in the embodiment;
FIG. 10 is an exemplary schematic diagram of a screen of program content when the reproducer reproduces chapters except a commercial message (CM) and a repetition in the embodiment;
FIG. 11 is an exemplary schematic diagram of a screen of program content when the reproducer reproduces only chapters assigned with a label "music" in the embodiment;
FIG. 12 is an exemplary schematic diagram of a screen in the case where a receive controller receives an instruction to divide program content into chapters and combine chapters while the reproducer is reproducing the program content in the embodiment;
FIG. 13 is an exemplary schematic diagram of a chapter edit screen displayed by the display controller in the embodiment;
FIG. 14 is an exemplary flowchart of the operation of the digital broadcast receiver to receive a broadcast signal in the embodiment; and
FIG. 15 is an exemplary flowchart of the operation of the digital broadcast receiver to reproduce program content in the embodiment.

### DETAILED DESCRIPTION

Various embodiments will be described hereinafter with reference to the accompanying drawings.

The broadcast recorder of the following embodiment will be described by way of example as being applied to a digital broadcast receiver.

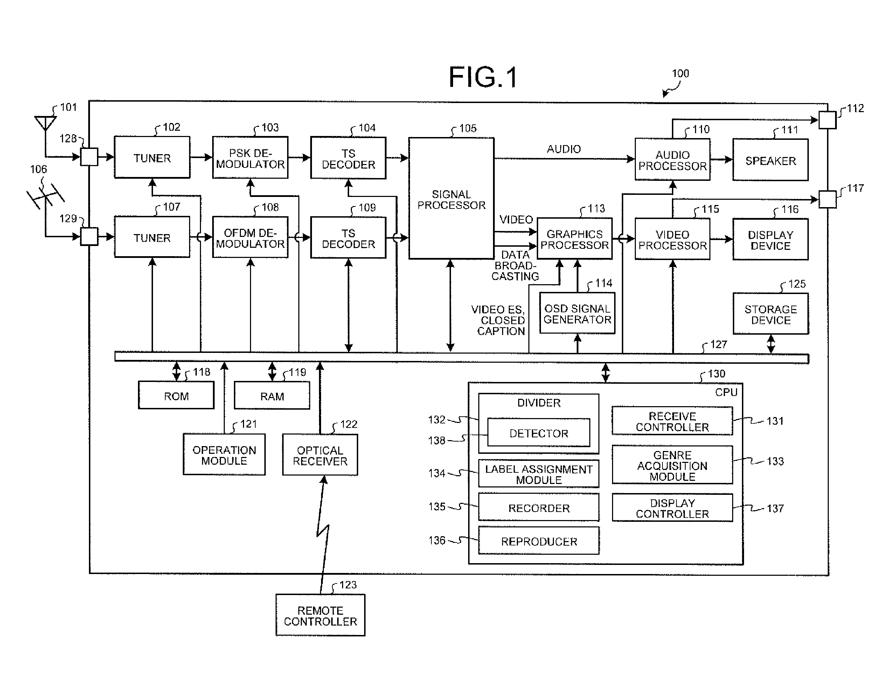

With reference to FIG. 1, a description will be given of a hardware configuration of a digital broadcast receiver 100 according to an embodiment. FIG. 1 is a block diagram of a signal processing system of the digital broadcast receiver 100.

As illustrated in FIG. 1, an input terminal 128 receives a satellite digital television (TV) broadcast signal received by an antenna 101 for receiving broadcast satellite/communication satellite (BS/CS) digital broadcasting. The satellite digital TV broadcast signal is fed via the input terminal 128 to a tuner 102 for satellite digital broadcasting.

The tuner 102 selects a desired channel and receives a broadcast signal of the desired channel from the satellite digital TV broadcast signal fed from the input terminal 128. The tuner 102 then outputs the broadcast signal received from the selected channel to a phase shift keying (PSK) demodulator 103.

The PSK demodulator 103 demodulates the broadcast signal received from the tuner 102. Thus, the PSK demodulator 103 obtains a transport stream (TS) containing a desired program, and outputs it to a TS decoder 104.

The TS decoder 104 performs TS decoding on a multiplexed TS signal output from the PSK demodulator 103. The TS decoder 104 also depacketizes digital video and audio signals of the desired program to obtain a packetized elementary stream (PES). The TS decoder 104 then outputs the PES to an system target decoder (STD) buffer (not illustrated) in a signal processor 105. In addition, the TS decoder 104 obtains section information transmitted through digital broadcasting from the TS output from the PSK demodulator 103, and outputs it to a section processor (not illustrated) in the signal processor 105.

On the other hand, an input terminal 129 receives a digital terrestrial TV broadcast signal received by an antenna 106 for receiving digital terrestrial broadcasting. The digital terrestrial TV broadcast signal is fed via the input terminal 129 to a tuner 107 for digital terrestrial broadcasting.

The tuner 107 selects a desired channel and receives a broadcast signal of the desired channel from the digital terrestrial TV broadcast signal fed from the input terminal 129. The tuner 102 then outputs the broadcast signal received from the selected channel to an orthogonal frequency division multiplexing (OFDM) demodulator 108.

The OFDM demodulator 108 demodulates the broadcast signal received from the tuner 107. Thus, the OFDM demodulator 108 obtains a TS containing a desired program, and outputs it to a TS decoder 109.

The TS decoder 109 performs TS decoding on a multiplexed TS signal output from the OFDM demodulator 108. The TS decoder 109 also depacketizes digital video and audio signals of the desired program to obtain a PES. The TS decoder 109 then outputs the PES to the STD buffer (not illustrated) in the signal processor 105. In addition, the TS decoder 109 obtains section information transmitted through digital broadcasting from the TS output from the OFDM demodulator 108, and outputs it to a section processor (not illustrated) in the signal processor 105.

While a user is viewing a TV program, the signal processor 105 selectively performs predetermined digital signal processing on the video and audio signals output from the TS decoders 104 and 109 and stored in the STD buffer. Then, the signal processor 105 outputs the video signal to a graphics processor 113 and the audio signal to an audio processor 110. On the other hand, while a TV program is being recorded, the signal processor 105 selectively performs predetermined digital signal processing on the video and audio signals output from the TS decoders 104 and 109 and stored in the STD buffer. A central processing unit (CPU) 130 controls the video and audio signals selectively subjected to the predetermined digital signal processing to be stored in a storage device 125 such as, for example, a hard disk drive (HDD) via a bus 127. At this time, the CPU 130 controls chapter division, which will be described later, and the like.

Besides, while a recorded TV program is being reproduced, the signal processor 105 performs predetermined digital signal processing on an input signal after the CPU 130 reads program content from the storage device 125. Then, the signal processor 105 outputs the video signal to the graphics processor 113 and the audio signal to the audio processor 110.

From the section information received from the TS decoders 104 and 109, the section processor outputs to the CPU 130 various types of data for obtaining a program (for example, channel number, etc.), electronic program guide (EPG) information, program attribute information such as program category, video, audio, closed caption information such as program specific information (PSI) and service information (SI), and the like.

The graphics processor 113 multiplexes or synthesizes the following signals: (1) a digital video signal fed from an AV decoder (not illustrated) in the signal processor 105, (2) an on-screen display (OSD) signal generated by an OSD signal generator 114, (3) image data of data broadcasting, and (4) EPG information, video elementary stream (PES), closed caption signal, generated by the CPU 130. The graphics processor 113 outputs the synthesized signals to a video processor 115. To display a close-captioned program with closed captions, the graphics processor 113 overlays closed caption information on a video signal under the control of the CPU 130.

The digital video signal output from the graphics processor 113 is input to the video processor 115. The video processor 115 converts the input digital video signal to an analog video signal in a format displayable on a display device 116 such as a liquid crystal display (LCD) panel. The video processor 115 then outputs the analog video signal to the display device 116. Besides, the video processor 115 outputs the analog video signal to an external device via an output terminal 117.

The audio processor 110 converts the digital audio signal output from the signal processor 105 to an analog audio signal in a format reproducible by a speaker 111. The audio processor 110 then outputs the analog audio signal to the speaker 111. Besides, the audio processor 110 outputs the analog audio signal to an external device via an output terminal 112.

The CPU 130 controls the overall operation of the digital broadcast receiver 100 including the operation of receiving various types of signals via the bus 127. Upon receipt of operation information sent from a remote controller 123 or the like via an optical receiver 122 and the bus 127, the CPU 130 controls the respective modules to operate according to the operation information.

The CPU 130 reads a broadcast recording program (not illustrated) stored in a read only memory (ROM) 118, and executes it using a random access memory (RAM) 119 as a work area. With this, the CPU 130 implements a receive controller 131, a divider 132, a genre acquisition module 133, a label assignment module 134, a recorder 135, a reproducer 136, and a display controller 137 as software functions. The above modules need not necessarily be implemented as software functions, but may be implemented by hardware coding.

In the digital broadcast receiver 100 of the embodiment, the divider 132 divides a digital broadcast signal into chapters before it is recorded on the storage device 125. The label assignment module 134 assigns a label to each of the chapters.

In the digital broadcast receiver 100 of the embodiment, a label such as "main part", "CM", "link part", "music", or the like is assigned to each of chapters. Upon reproducing program content stored in the storage device 125, the reproducer 136 can reproduce only a chapter extracted based on a label assigned thereto.

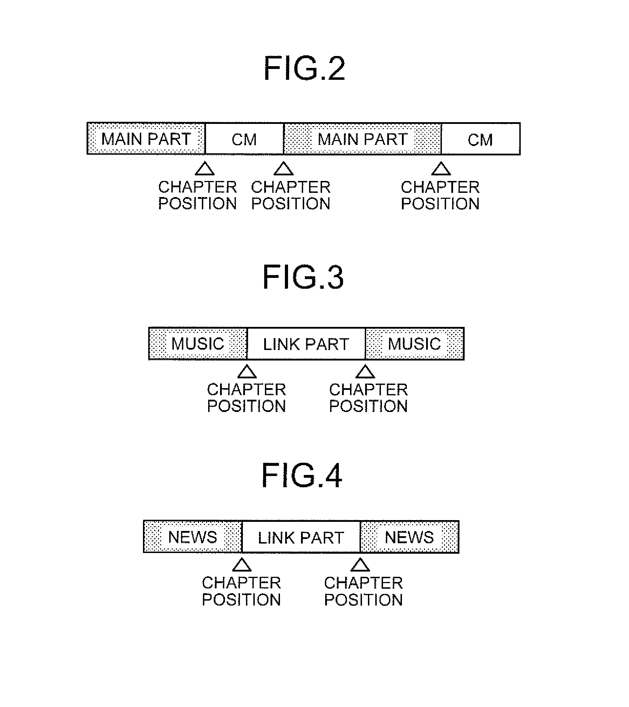

FIG. 2 illustrates an example of divided program content of a digital broadcast signal received by the digital broadcast receiver 100. In the example of FIG. 2, the divider 132 divides common program content into chapters "main part" and "CM", and the label assignment module 134 assigns a label to each of the chapters. This allows the continuous reproduction of only "main part" chapters or "CM" chapters upon reproduction of the program content. The genre acquisition module 133 acquires in advance the type of a received program (whether the received program is a common program) from EPG or the like.

1 FIG. 3 illustrates an example of divided music program content of a digital broadcast signal received by the digital broadcast receiver 100. In the example of FIG. 3, the divider 132 divides music program content into chapters "music", "link part", and "CM" (not illustrated), and the label assignment module 134 assigns a label to each of the chapters. The genre acquisition module 133 acquires in advance whether the received program is a music program from EPG or the like.

For example, in the digital broadcast receiver 100, a detector 138 detects a music part in a video. The divider 132 divides the video into chapters based on the start and end of the music part. The label assignment module 134 assigns a label "music" to a scene from the start to end of the music part. The label assignment module 134 assigns a label "link part" to other scenes. This allows the continuous reproduction of only "music" chapters or other scenes than music chapters such as a link part, introduction of the singer and the episode, and the like upon reproduction of content.

FIG. 4 illustrates an example of divided news program content of a digital broadcast signal received by the digital broadcast receiver 100. As illustrated in FIG. 4, in the digital broadcast receiver 100, the divider 132 divides news program content into chapters "news", "link part", and "CM" (not illustrated). A news program is only divided into chapters, and a label is not assigned to each of the chapters.

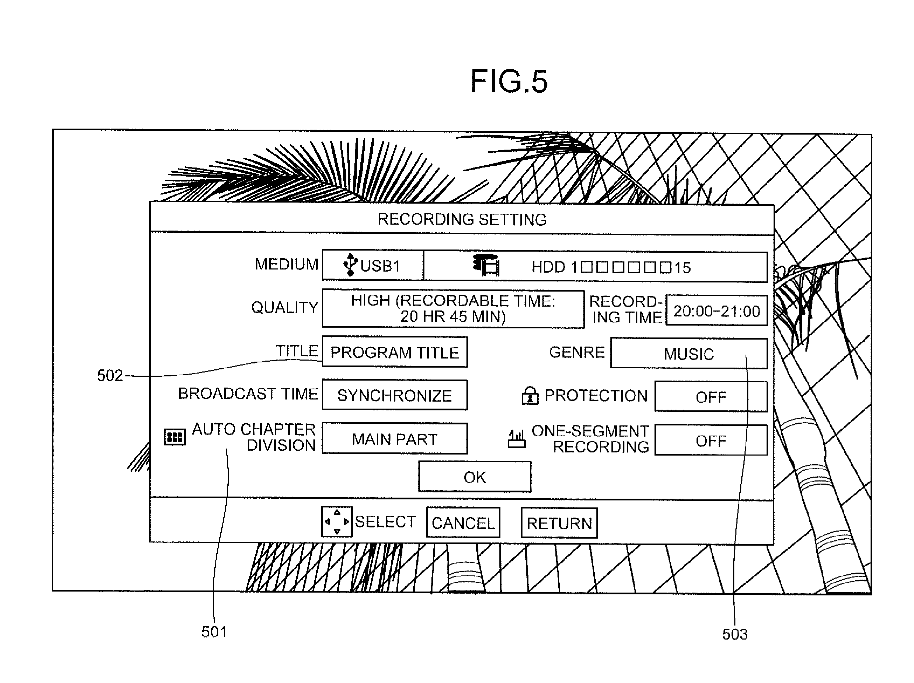

The receive controller 131 receives operation information from an operation module 121. Examples of the operation information include programmed or timer recording of program content by a broadcast signal, the type of chapter division of the program content programmed to be recorded, and the like. Upon receipt of an instruction to program the recording of program content, the receive controller 131 receives the instruction to timer-record a program from EPG. FIG. 5 illustrates an example of a recording setting screen displayed by the digital broadcast receiver 100.

The recording setting screen illustrated in FIG. 5 displays a title 502 obtained from EPG and a genre 503. The receive controller 131 receives operation information on automatic chapter division through an auto chapter division 501 displayed on the recording setting screen. The types of automatic chapter division include "auto", "main part", "scene", "OFF", and the like. If the genre 503 indicates music, the receive controller 131 receives "music" or the like as the type of automatic chapter division. When the type of automatic chapter division is "auto", labeling is performed automatically according to content (for example, a label "main part", "music", "link part", "repetition", "CM", or the like is assigned) . In the case of "main part", a label "main part" or "CM" is assigned. In the case of "music", a label "music", "link part", or "CM" is assigned. In the case of "scene", a label "news", "link part", or "CM" is assigned.

As described above, in the embodiment, received program content is recorded after being divided into chapters. According to conventional technologies, in response to an instruction from the user to divide program content stored in the storage device into chapters, the program content is divided into chapters. On the other hand, according to the embodiment, program content is divided into chapters upon receipt of the program content.

Accordingly, when the user wishes to refer to only a desired scene of program content stored in the storage device 125, the program content has already been divided into chapters. This reduces the operational load to divide program content stored in the storage device 125 into chapters as well as the waiting time until the program content is divided into chapters required in the conventional technologies. That is, when the user wishes to refer to a desired scene, he/she can refer to the scene immediately. This improves the convenience and the usability.

The divider 132 comprises the detector 138. The divider 132 analyzes program content obtained from a digital broadcast signal, and automatically divides the program content into plurality of chapters according to the type of chapter division received by the receive controller 131. In the embodiment, when the receive controller 131 receives setting of the type of chapter division through the recording setting screen, the divider 132 divides program content (video and audio signals) received by the tuners 102 and 107 and processed by the signal processor 105 into chapters according to the type of chapter division set on the recording setting screen.

The detector 138 detects a scene change in received program content by any suitable method including known methods.

In the automatic chapter division, if the selected type of chapter division is "main part", the detector 138 automatically detects a position at which scene changes in a video signal (for example, between main part and CM). The divider 132 automatically performs chapter division based on the detected position. As another example, if the genre of program content is music, the divider 132 divides the program content into music scenes and other link parts.

For example, if the genre of program content is "music" and also the selected type of chapter division is "music", the detector 138 detects music from a music signal contained in a broadcast signal, thereby detecting a scene change. The divider 132 divides the program content into scenes where music is detected as "music" chapters and other scenes as "link part" chapters.

The genre acquisition module 133 acquires the genre of program content obtained from a broadcast signal. In the embodiment, the genre acquisition module 133 acquires the genre of each program from EPG.

The label assignment module 134 assigns a label indicating a chapter type to each chapter obtained by the divider 132. The labels to be assigned are not limited to those described above, and any label may be applied according to program content. The label assignment module 134 of the embodiment assigns a suitable label according to the genre of program content. For example, if the genre of program content is "music", the label assignment module 134 assigns labels "music", "link part", and "CM".

There is a case that the label assignment module 134 assigns a label "repetition". That is, there is a case that the same scene is broadcasted both before and after "CM" in program content. In the embodiment, if such a repetitive scene is detected, the divider 132 extracts the scene as a chapter, and the label assignment module 134 assigns a label "repetition" to the chapter.

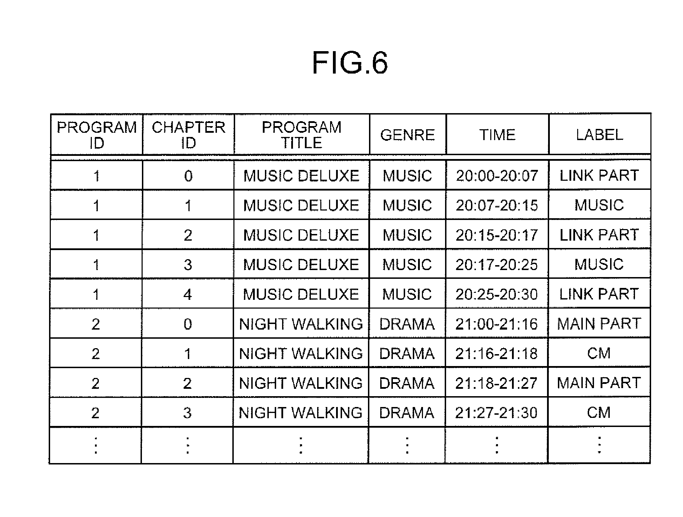

The recorder 135 records program content divided into chapters according to the type on the storage device 125. Besides, the label is stored in association with each chapter of the program content. FIG. 6 illustrates an example of a structure of a table for managing chapters of program content and labels each indicating one of the chapters. As illustrated in FIG. 6, the storage device 125 has a table that stores program ID, chapter ID, program title, genre, time, and label in association with one another. In this manner, each chapter divided from program content is assigned with a label indicating the chapter. Thus, the program content can be reproduced according to the type of chapter division.

The genre indicates the genre of a program acquired by the genre acquisition module 133. The program ID is uniquely defined with respect to each program content. The chapter ID is set with respect to each of chapters contained in program content. The label indicates a label that the label assignment module 134 assigns to each chapter.

When the receive controller 131 receives an instruction from the user to reproduce program content, the reproducer 136 reads the program content from the storage device and controls the reproduction thereof. According to user's operation, the reproducer 136 switches control of continuous reproduction of video consisting of chapters corresponding to the type of chapter division and control of continuous reproduction of the entire program content. The video consisting of chapters corresponding to the type of chapter division refers to video consisting of chapters each assigned with a label (for example, "main part" or the like) corresponding to the type of chapter division. When the type of chapter division is "auto", the reproducer 136 continuously reproduces video of chapters assigned with a label other than "CM" and "repetition".

The display controller 137 controls the OSD signal generator 114 to control the display of a setting screen, a reproduction control banner, and the like.

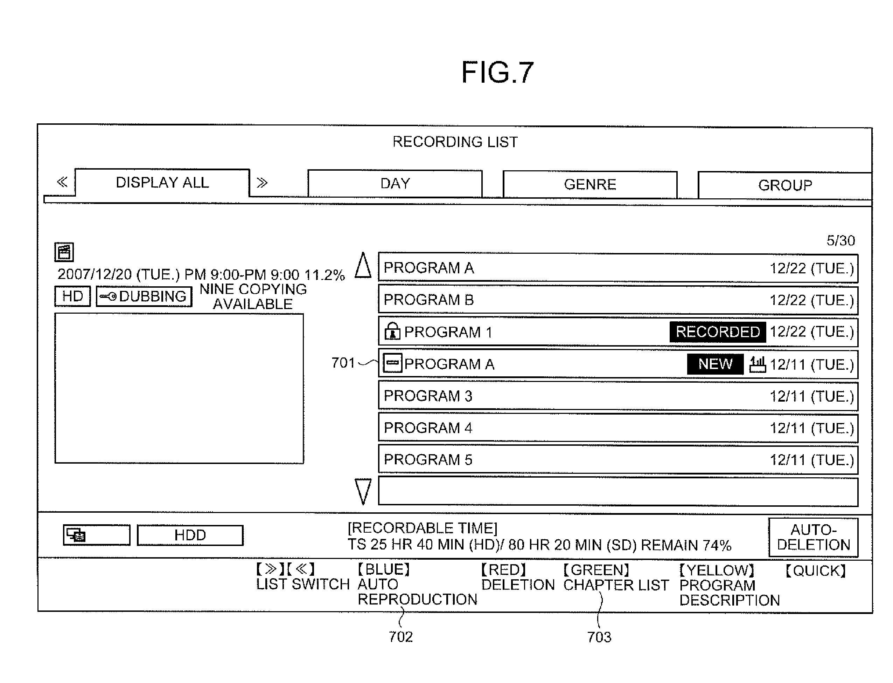

FIG. 7 illustrates an example of screen displaying a list of program contents stored in the storage device 125 displayed by the display controller 137. In the example of FIG. 7, for program content divided into chapters, the display controller 137 displays an icon 701 indicating that the program content has been divided into chapters. The displayed icon varies depending on the type of chapter division described above. For example, the display controller 137 displays different icons indicating the types of chapter division "auto", "main part", and "music", respectively. Any icon may be used as long as the user can recognize the difference in the type of chapter division.

The list screen illustrated in FIG. 7 displays all recorded program contents in descending order of date. With respect to program content selected by a cursor on the list screen, the list screen displays the genre, the recording channel, the recording date, an icon indicating high definition (HD), dubbing information, and the preview of the program on the left side.

When the user places a cursor on program content divided into chapters and presses the "enter" button on the remote controller, the receive controller 131 receives the selection of the program content and the reproducer 136 reproduces the program content in an ordinary manner. Meanwhile, auto-reproduction 702 is set to the "blue" button on the remote controller. When the receive controller 131 receives the press of the "blue" button on the remote controller, the reproducer 136 reproduces only chapters extracted according to a predetermined standard (hereinafter, sometimes referred to as "automatic reproduction").

Besides, chapter list 703 is set to the "green" button on the remote controller. When the receive controller 131 receives the press of the "green" button on the remote controller, the display controller 137 displays a screen indicating a list of chapters of program content.

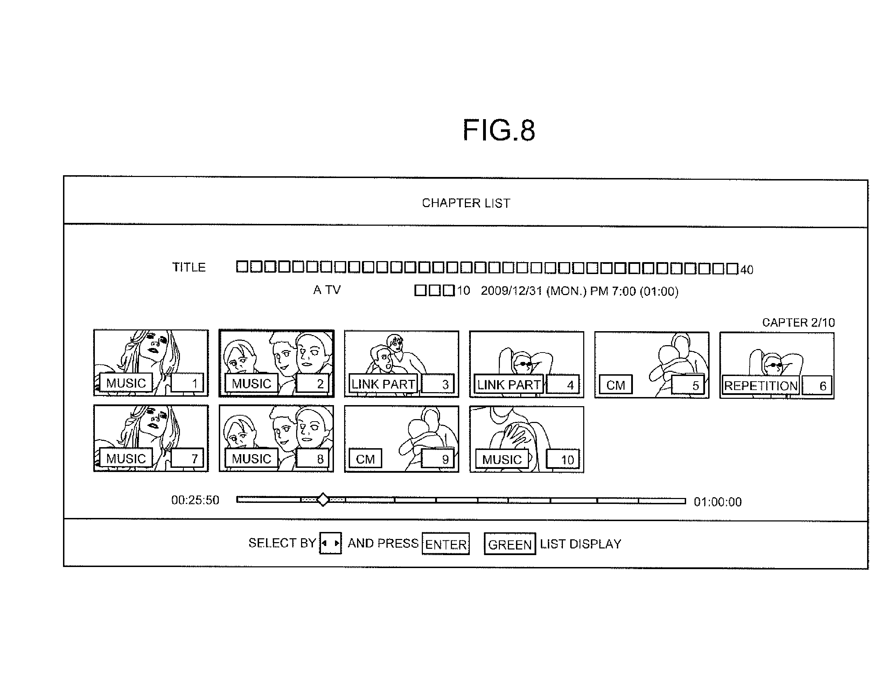

FIG. 8 illustrates an example of the chapter list screen displayed by the display controller 137. As illustrated in FIG. 8, the display controller 137 displays an icon assigned to each chapter in association with the chapter on the chapter list screen. In the example of FIG. 8, labels such as "music", "link part", "CM", and "repetition" are displayed in association with chapters, respectively.

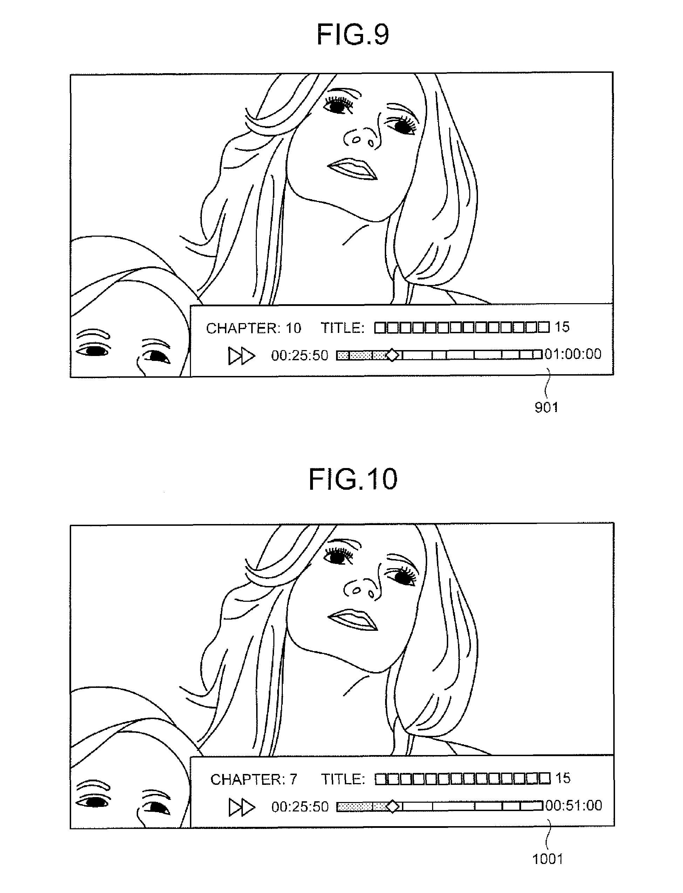

The reproducer 136 controls the reproduction of program content divided into chapters in this manner. FIG. 9 illustrates an example of a screen of program content divided into chapters reproduced by the reproducer 136 in a usual manner. FIG. 9 illustrates an example of program content divided into 10 chapters. While the reproducer 136 is reproducing the video or moving image content, the display controller 137 displays a total number of chapters to be reproduced, a total time of the 10 chapters "01:00:00", and a bar indicating a total time of the program content in a reproduction control banner 901. The bar indicates each of the chapters divided from the program content.

When the receive controller 131 receives the press of the "blue" button on the remote controller, the reproducer 136 (automatically) reproduces only chapters extracted based on labels. In the automatic reproduction, for example, chapters assigned with a label other than "CM" and "repetition" may be reproduced as extracted chapters.

FIG. 10 illustrates an example of a screen of program content when the reproducer 136 reproduces chapters except "CM" and "repetition". FIG. 10 illustrates an example of program content in which 7 chapters except "CM" and "repetition" are reproduced. The display controller 137 displays a total number of chapters to be reproduced, a total time of the 7 chapters "00:51:00", and a bar indicating a total time of the 7 chapters of the program content in a reproduction control banner 1001. In this manner, the display controller 137 displays a total length of chapters to be reproduced except "CM" and "repetition" as a content length in the reproduction control banner. Thus, the user can visually recognize the view time.

The reproducer 136 may reproduce only chapters extracted according to other standards. For example, if the genre of program content is "music", only chapters assigned with a label "music" may be extracted.

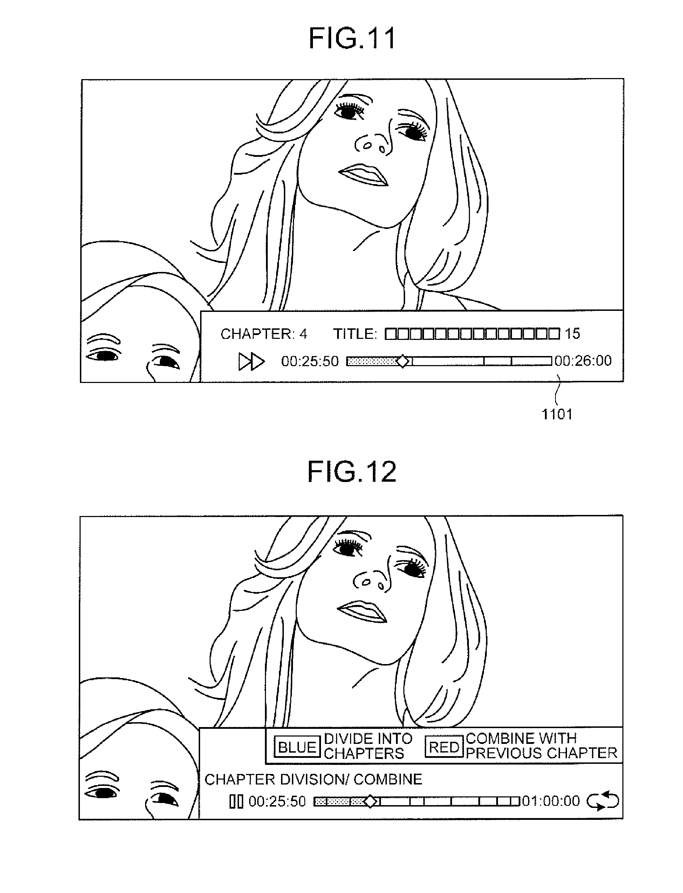

FIG. 11 illustrates an example of a screen of program content when the reproducer 136 reproduces only chapters assigned with a label "music". FIG. 11 illustrates an example of program content in which 4 chapters assigned with "music" are reproduced. The display controller 137 displays a total number of chapters to be reproduced, a total time of the 4 chapters "00:26:00", and a bar indicating a total time of the 4 chapters of the program content in a reproduction control banner 1101. In this manner, the display controller 137 displays a total length of music chapters except other chapters as a content length in the reproduction control banner. Thus, the user can visually recognize the view time.

While the reproducer 136 is reproducing program content in an ordinary manner, an instruction may be received to divide the program content into chapters, to combine chapters, or the like. FIG. 12 illustrates an example of a screen when the receive controller 131 receives an instruction to divide program content into chapters and combine chapters in the reproduction control banner while the reproducer 136 is reproducing the program content. In the example of FIG. 12, when the receive controller 131 receives the press of the "blue" button on the remote controller, the divider 132 divides program content into chapters at a point currently being reproduced as a division point. In this case, a label before the division is assigned to each of the chapters. Besides, in the example of FIG. 12, when the receive controller 131 receives the press of the "red" button on the remote controller, the divider 132 combines a chapter currently being reproduced with the previous chapter. In this case, the label of the previous chapter is assigned to a combined chapter.

When the receive controller 131 receives an instruction to divide program content into chapters or to combine chapters while the reproducer 136 is automatically reproducing the program content, the chapter division or the chapter combine may be performed after the automatic reproduction is switched to normal reproduction. Besides, while the reproducer 136 is automatically reproducing program content, the receive controller 131 may not be allowed to receive an instruction to combine chapters.

While the reproducer 136 is automatically reproducing program content, the display controller may display an indication that the program content is divided into chapters at a discontinuous point between chapters.

In the case where time is skipped while the reproducer 136 is automatically reproducing program content, if the receive controller 131 receives an instruction to jump a specified time including a discontinuous point, the time jump may be performed according to the elapsed time of extracted chapters not taking into account unextracted chapters. Alternatively, the time jump may be performed after the automatic reproduction is canceled.

In the case where the reproducer 136 automatically reproduces program content by resume reproduction, if a resume point is present in an unextracted chapter (for example, in a "CM" or "repetition" chapter), the reproducer 136 reproduces the program content from the start of a chapter (for example, a "main part" chapter) with a chapter number larger than that of the unextracted chapter, which has been extracted according to a predetermined standard.

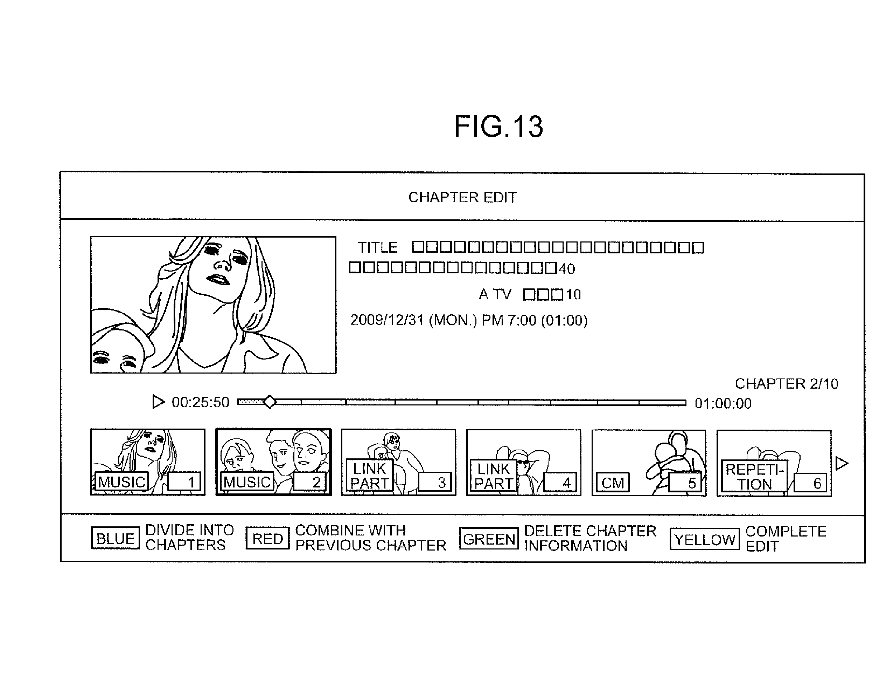

Chapters need not necessarily be edited while being reproduced. An instruction to edit chapters may be received on a chapter edit screen. FIG. 13 illustrates an example of a chapter edit screen displayed by the display controller 137. An edit instruction may be received on the chapter edit screen illustrated in FIG. 13 to divide program content into chapters, to combine chapters, to delete chapter information (for example, a label), and the like.

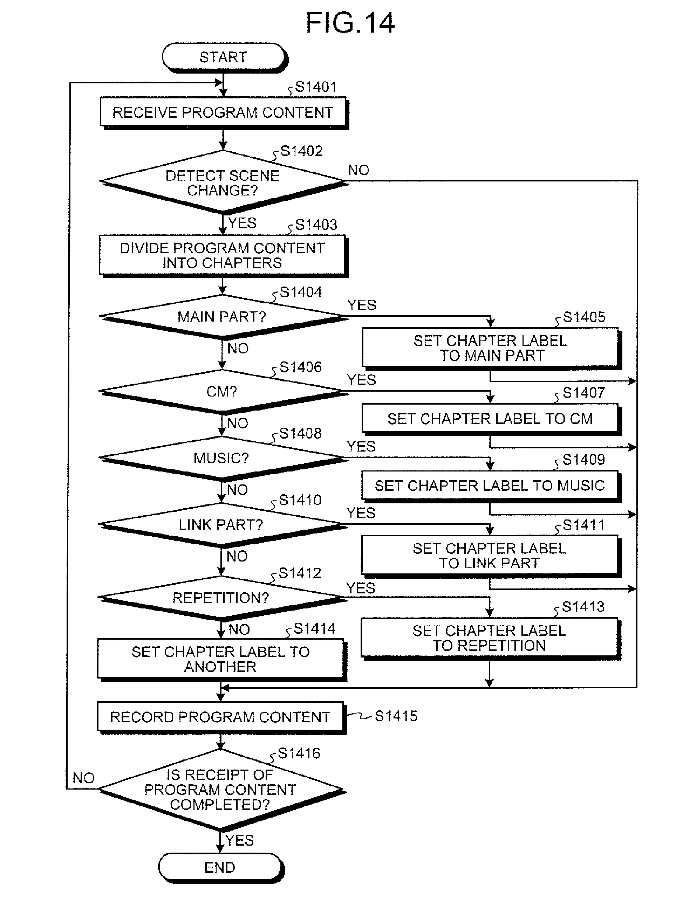

In the following, a description will be given of the operation of the digital broadcast receiver 100 upon receipt of a broadcast signal. FIG. 14 is a flowchart of the operation of the digital broadcast receiver 100 to receive a broadcast signal. In the example of FIG. 14, it is set that program content is automatically divided into chapters when the program is recorded.

First, the tuners 102 and 107 receive program content contained in a broadcast signal (S1401). The received broadcast signal undergoes various processes during a period from the tuners 102 and 107 to the signal processor 105.

With respect to the program content processed by the signal processor 105, it is determined whether the detector 138 detects a scene change in the program (S1402). If the detector 138 does not detect a scene change (No at S1402), the process moves to S1415.

On the other hand, if the detector 138 detects a scene change in the program (Yes at S1402), the divider 132 divides the program content into chapters at the scene change (S1403). After the chapter division, the label assignment module 134 determines whether the detected scene is a main part (S1404). The determination is made taking into account the genre of the program content. The determination may be made by any suitable method including known methods.

When determining that the detected scene is a main part (Yes at S1404), the label assignment module 134 sets a chapter label indicating the scene to "main part" (S1405).

When determining that the detected scene is not a main part (No at S1404), the label assignment module 134 determines whether the detected scene is CM (S1406). The determination may be made by any suitable method including known methods.

When determining that the detected scene is CM (Yes at S1406), the label assignment module 134 sets a chapter label indicating the scene to "CM" (S1407).

When determining that the detected scene is not CM (No at S1406), the label assignment module 134 determines whether the detected scene is music when the genre of the program content is "music" (S1408).

When determining that the detected scene is music (Yes at S1408), the label assignment module 134 sets a chapter label indicating the scene to "music" (S1409).

When determining that the genre of the program content is not "music" or the detected scene is not music (No at S1408), the label assignment module 134 determines whether the detected scene is a link part (S1410). The determination may be made by any suitable method including known methods.

When determining that the detected scene is a link part (Yes at S1410), the label assignment module 134 sets a chapter label indicating the scene to "link part" (S1411).

When determining that the detected scene is not a link part (No at S1410), the label assignment module 134 determines whether the detected scene is a repetition of another scene (S1412).

When determining that the detected scene is a repetition of another scene (Yes at S1412), the label assignment module 134 sets a chapter label indicating the scene to "repetition" (S1413).

When determining that the detected scene is not a repetition of another scene (No at S1412), the label assignment module 134 sets a chapter label indicating the scene to "another" (S1414).

Thereafter, the recorder 135 stores information related to the program content and records the program content on the storage device 125 (S1415). The program content and the information is stored regardless of whether the program content has been divided into chapters. The information related to the program content may be a label assigned thereto.

After that, the CPU 130 determines whether the receipt of the program content is completed (S1416). If not (No at S1416), the process returns to S1401 and starts again therefrom.

On the other hand, if the CPU 130 determines that the receipt of the program content is completed (Yes at S1416), the process ends. In this manner, a label is automatically assigned to each chapter of program content and is stored.

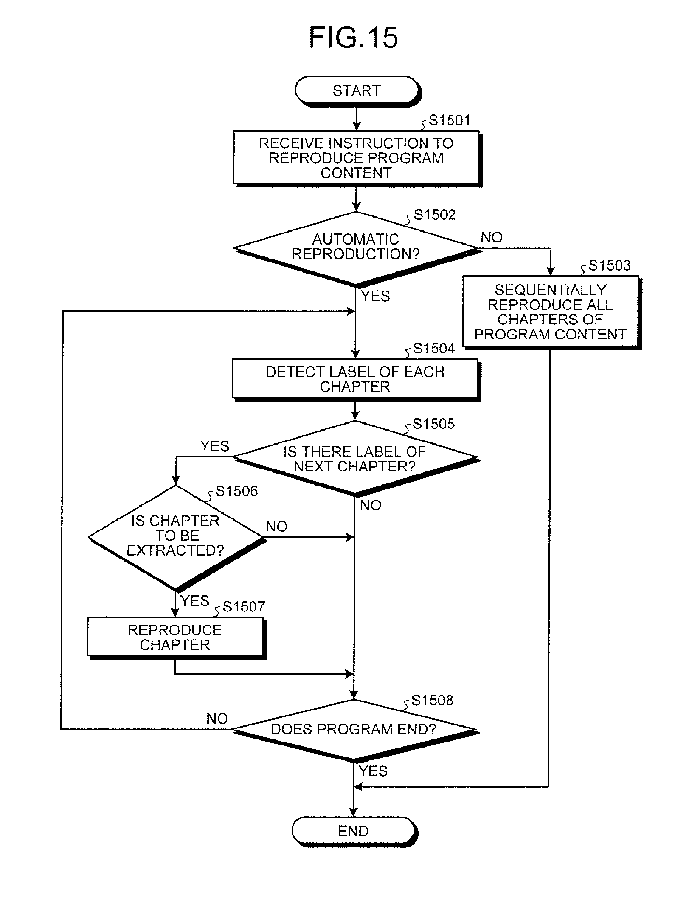

In the following, a description will be given of the operation of the digital broadcast receiver 100 to reproduce program content. FIG. 15 is a flowchart of the operation of the digital broadcast receiver 100 to reproduce program content. In the example of FIG. 15, program content that is automatically divided into chapters in FIG. 14 is reproduced.

First, the receive controller 131 receives an instruction to reproduce program content (S1501). The reproducer 136 then determines whether the instruction specifies automatic reproduction (S1502). If automatic reproduction is not specified (No at S1502), the reproducer 136 sequentially reproduces all chapters of the program content in an ordinary manner (S1503), and the process ends.

On the other hand, when determining that the instruction specifies automatic reproduction (Yes at S1502), the reproducer 136 searches the storage device 125 for a label of each chapter contained in the program content to be reproduced (S1504). The reproducer 136 determines whether a label is assigned to a chapter to be reproduced next (S1505). If a label is not assigned to the next chapter (No at S1505), the process moves to S1508.

When determining that a label is assigned to the next chapter (Yes at S1505), the reproducer 136 determines whether the label is an object to be extracted, i.e., the type of chapter division for reproduction includes the chapter label (S1506). Different labels are to be extracted depending on the type of chapter division. For example, if the type of chapter division is "main part", a label "main part" is to be extracted. If the type of chapter division is "music", a label "music" is to be extracted. If the type of chapter division is "scene", a label "scene" is to be extracted. If the type of chapter division is "auto", a label other than "CM" and "repetition" is to be extracted. If the reproducer 136 determines that the label is not an object to be extracted (No at S1506), the process moves to S1508.

On the other hand, if determining that the label is an object to be extracted (Yes at S1506), the reproducer 136 reproduces video of a chapter associated with the label (S1507).

After that, the reproducer 136 determines whether the program content ends (S1508). If the reproducer 136 determines that the program content does not end (No at S1508), the process returns to S1504 and starts again therefrom. On the other hand, if the reproducer 136 determines that the program content ends (Yes at S1508), the process ends.

In this manner, the digital broadcast receiver 100 is capable of sequentially reproducing videos of chapters of program content corresponding to the type of chapter division.

In the digital broadcast receiver 100 of the embodiment, if the receive controller 131 receives an instruction from the user to divide program content not divided into chapters when received, the divider 132 may automatically divide the program content into chapters.

In another embodiment, in the digital broadcast receiver 100, program content may be set to be automatically reproduced when recorded. In this case, in the digital broadcast receiver 100, when the receive controller 131 receives only an instruction to reproduce program content, the reproducer 136 automatically reproduces the program content. This reduces the operational load on the user. If such a setting is specified, the display controller 137 displays an icon indicating automatic reproduction with respect to the program content for which the setting is specified upon displaying a program content list screen. At this time, the display controller 137 displays an icon indicating a chapter to be reproduced. Examples of the icon includes those represented by letters or characters such as "main part", "music", and the like. The icon may be represented by letters or characters such as "CM".

As set forth hereinabove, according to the embodiment, the digital broadcast receiver 100 configured as above is capable of displaying only chapters desired by the user and extracted from program content (for example, reproducing the program content while skipping CM) without the operational load on the user (without operation to divide the program content into chapters or to perform specific reproduction). With this, the digital broadcast receiver 100 is capable of providing the user with reproduction and operational feeling for program content where unnecessary scenes have been eliminated. Thus, it is possible to provide a comfortable view of program content.

A computer program (hereinafter, "broadcast recording program") may be executed on a computer to realize the same function as the digital broadcast receiver 100 of the embodiment. The broadcast recording program may be provided as being stored in a computer-readable storage medium, such as a compact disk read-only memory (CD-ROM), a flexible disk (FD), a compact disc-recordable (CD-R), or a digital versatile disk (DVD), in an installable or executable format.

The broadcast recording program may also be stored in a computer connected via a network such as the Internet so that it can be downloaded therefrom via the network. The broadcast recording program may also be provided or distributed via a network such as the Internet.

The broadcast recording program may also be provided as being stored in advance in ROM or the like.

The various modules of the systems described herein can be implemented as software applications, hardware and/or software modules, or components on one or more computers, such as servers. While the various modules are ill ustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A broadcast recorder comprising:
a receiver (131) configured to receive an instruction to program recording of program data and a selection of type of chapter division to be performed on the program data;
a recorder (135) configured to divide the program data into chapters according to the type of chapter division and record the program data; and
a reproducer (136) configured to sequentially reproduce videos of chapters corresponding to the type of chapter division in the program data in response to an instruction to reproduce the program data.

2. The broadcast recorder of Claim 1, wherein the receiver (131) is configured to receive the instruction to program the recording of the program data from an electronic program guide.

3. The broadcast recorder of Claim 1 or 2, wherein the type of chapter division includes at least one of a main part, music, and a scene as a chapter of the program data.

4. The broadcast recorder of any one of Claims 1 to 3, further comprising a display module (137) configured to display program list information in which an icon indicating the type of chapter division is associated with the program data.

5. The broadcast recorder of any one of Claims 1 to 4, wherein the reproducer (136) is configured to be capable of changing whether to reproduce the program data according to the type of chapter division.

6. A broadcast recording method comprising:
receiving, by a receiver, an instruction to program recording of program data and a selection of type of chapter division to be performed on the program data;
dividing, by a recorder, the program data into chapters according to the type of chapter division and recording the program data; and
sequentially reproducing, by a reproducer, videos of chapters corresponding to the type of chapter division in the program data in response to an instruction to reproduce the program data.

7. A computer program product embodied on a computer-readable medium and comprising code that, when executed, causes a computer to perform:
receiving an instruction to program recording of program data and a selection of type of chapter division to be performed on the program data;
dividing the program data into chapters according to the type of chapter division and recording the program data; and
sequentially reproducing videos of chapters corresponding to the type of chapter division in the program data in response to an instruction to reproduce the program data.
